# EUROPÄISCHE PATENTSCHRIFT

(11) **EP 4 182 987 B1**
(45) Veröffentlichungstag und Bekanntmachung des Hinweises auf die Patenterteilung: **02.10.2024**
(21) Anmeldenummer: 21749548.0
(22) Anmeldetag: 15.07.2021
(51) Int. Cl.: H01M 8/2485, H01M 8/249, H01M 8/0202, B60L 50/72

(54) **STAPELMODULBOX IN VERBINDUNG MIT EINER MEHRZAHL ZU DER STAPELMODULBOX GEFÜHRTEN MEDIENFÜHRUNGEN, BRENNSTOFFZELLENVORRICHTUNG SOWIE BRENNSTOFFZELLEN-FAHRZEUG**
STACK MODULE BOX CONNECTED TO A PLURALITY OF MEDIA GUIDES LEADING TO THESTACK MODULE BOX, FUEL CELL DEVICE AND FUEL CELL VEHICLE
BOÎTE MODULAIRE D'EMPILEMENT RELIÉE À UNE PLURALITÉ DE CONDUITES DE MILIEUX GUIDÉES JUSQU'À LA BOÎTE MODULAIRE D'EMPILEMENT, ENSEMBLE PILE À COMBUSTIBLE ET VÉHICULE À PILE À COMBUSTIBLE

(30) Priorität: 17.07.2020 DE 102020119020
(43) Veröffentlichungstag der Anmeldung: 24.05.2023
(73) Patentinhaber: VOLKSWAGEN AG, 38440 Wolfsburg (DE); KRAFTWERK TUBES GMBH, 01324 Dresden (DE)
(72) Erfinder: KÜHN, Sascha, 01324 Dresden (DE); HEINRICH, Lutz, 01324 DRESDEN (DE); TURNER, Heiko, 38159 Vechelde (DE); JENSSEN, Dirk, 38114 Braunschweig (DE); SCHLITZBERGER, Christian, 39217 Schönebeck (DE); BUCHENBERGER, Martin, 38176 Wendeburg (DE); WALKLING, Friedhelm, 38114 Braunschweig (DE); MOLL, Dr. Florian, 38550 Isenbüttel (DE); WIELAND, Steffen, 74388 Talheim (DE); ZIMMERMANN, Christin, 01189 Dresden (DE)
(74) Vertreter: Hentrich Patent- & Rechtsanwaltspartnerschaft mbB
(86) Internationale Anmeldenummer: PCT/EP2021/069779
(87) Internationale Veröffentlichungsnummer: WO 2022/013364

(56) Entgegenhaltungen:
- KR-A- 20140 125 219
- US-A1- 2005 014 058
- US-A1- 2005 089 736
- US-A1- 2015 024 299

## Beschreibung

Die Erfindung betrifft eine Stapelmodulbox mit einem darin aufgenommenen, mindestens eine Brennstoffzelle aufweisenden Brennstoffzellenstapel, in Verbindung mit einer Mehrzahl zu der Stapelmodulbox geführten Medienführungen, aus denen Medien an die Stapelmodulbox abgegeben oder aus der Stapelmodulbox aufgenommen werden können, wobei mindestens zwei der Medienführungen zur Stromabführung aus dem Brennstoffzellenstapel elektrisch leitfähige Bereiche aufweisen und/oder die Wandung der Stapelmodulbox an den den Medienleitungen gegenüberliegenden Bereichen elektrisch leitfähig ist, und wobei Anschlussleitungen von dem Brennstoffzellenstapel zu den elektrischen leitfähigen Bereichen und von diesen weggeführt sind. Die Erfindung betrifft weiterhin eine Brennstoffzellenvorrichtung sowie ein Brennstoffzellen-Fahrzeug.

Brennstoffzellen dienen dazu, in einer chemischen Reaktion zwischen einem wasserstoffhaltigen Brennstoff und einem sauerstoffhaltigen Oxidationsmittel, in der Regel Luft, elektrische Energie bereitzustellen. Bei einer Festoxid-Brennstoffzelle (Solid Oxide Fuel Cell SOFC) besteht dabei eine Elektrolytschicht aus einem namensgebenden festen Werkstoff, z.B. keramischen yttriumdotierten Zirkoniumdioxid, der in der Lage ist, Sauerstoffionen zu leiten, während Elektronen nicht geleitet werden. Die Elektrolytschicht ist zwischen zwei Elektrodenschichten aufgenommen, nämlich der Kathodenschicht, der die Luft zugeführt wird, und der Anodenschicht, die mit dem Brennstoff versorgt wird, der durch H₂, CO, CH₄ oder ähnliche Kohlenwasserstoffe gebildet sein kann. Wird die Luft durch die Kathodenschicht zu der Elektrolytschicht geführt, nimmt der Sauerstoff zwei Elektronen auf und die gebildeten Sauerstoffionen O²⁻ bewegen sich durch die Elektrolytschicht zu der Anodenschicht, wobei die Sauerstoffionen dort mit dem Brennstoff reagieren unter Bildung von Wasser und CO₂. Kathodenseitig findet die folgende Reaktion statt: ½O₂ + 2e⁻--> 2O²⁻ (Reduktion/Elektronenaufnahme). An der Anode erfolgen die folgenden Reaktionen: H₂ + O²⁻ --> H₂O + 2e⁻ sowie CO + O²⁻ --> CO₂ + 2e⁻ (Oxidation/E lektronenabgabe).

Zur Steigerung der durch eine Brennstoffzellenvorrichtung bereit gestellten elektrischen Leistung besteht die Möglichkeit, mehrere Brennstoffzellen in einem in einer Stapelmodulbox bereit gestellten Brennstoffzellenstapel zusammen zu fassen, für den eine ausreichende Versorgung mit den Reaktanten sichergestellt sein muss, die durch Medienführungen dem Brennstoffzellenstapel und in diesem den Brennstoffzellen zugeführt werden.

In der KR 20050070724 A ist eine Brennstoffzelle gezeigt, mit der Methanol mit gleichmäßiger Konzentration an eine Elektrode transferiert werden kann, wobei die Brennstoffzelle ein zylindrisches Brennstoffversorgungsrohr aufweist mit einer Mehrzahl von Öffnungen für die Abgabe des Brennstoffs an den äußeren Umfang, und ein zylindrisches Luftversorgungsrohr mit einer Mehrzahl von Öffnungen für die Abgabe der Luft. Zwischen den beiden Rohren ist eine Membranelektrodenanordnung (MEA) platziert. Wiederum zwischen der MEA und den Rohren sind rohrförmige Stromsammler angeordnet. Die KR 100738308 B1 offenbart eine Festoxid-Brennstoffzelle mit einem zylindrischen Aufbau und einem im Zentrum angeordneten Brennstoffversorgungsrohr; zwischen diesem und der Anode ist ein metallisches Gewebe angeordnet. Um die Kathode ist zur Stromabführung ein Draht gewickelt. In der US 2006/0194099 A1 wird eine flexible Brennstoffzelle beschrieben, bei der die Anoden-Stromsammelschicht als Medienführung für die Luftversorgung genutzt wird.

In der KR 2014 0125219 A wird ein Gehäuse für einen Brennstoffzellenstapel, einschließlich eines Verteilers mit einem Stromsammler beschrieben. Die US 2015/024299 A1 beschreibt einen Brennstoffzellenstapel, wobei den Enden des Brennstoffzellenstapels Stromsammler zugeordnet sind.

Aufgabe der vorliegenden Erfindung ist es, eine Stapelmodulbox in Verbindung mit einer Mehrzahl zu der Stapelmodulbox geführten Medienführungen bereit zu stellen, die einen kompakten Aufbau besitzt. Aufgabe ist weiterhin, diese Medienführungen als Stromleiter zu verwenden, um eine unnötige Wärmeabfuhr aus der Stapelmodulbox zu verhindern sowie eine verbesserte Brennstoffzellenvorrichtung und ein verbessertes Brennstoffzellen-Fahrzeug bereit zu stellen.

Diese Aufgabe wird durch eine Stapelmodulbox in Verbindung mit einer Mehrzahl zu der Stapelmodulbox geführten Medienführungen mit den Merkmalen des Anspruchs 1, durch eine Brennstoffzellenvorrichtung mit den Merkmalen des Anspruchs 9 und durch ein Brennstoffzellen-Fahrzeug mit den Merkmalen des Anspruchs 10 gelöst. Vorteilhafte Ausgestaltungen mit zweckmäßigen Weiterbildungen der Erfindung sind in den abhängigen Ansprüchen angegeben.

Die erfindungsgemäße Stapelmodulbox in Verbindung mit einer Mehrzahl zu der Stapelmodulbox geführten Medienführungen zeichnet sich dadurch aus, dass eine geringe Anzahl von Bauteilen ausreicht durch die Zuweisung einer zusätzlichen Funktion zu den Medienführungen und/oder der Wandung, die insbesondere elektrisch leitfähig ist. Zusätzliche Bauteile oder Leitungen werden dadurch eingespart und es ergibt sich der gewünschte kompakte Aufbau. Die von der Stapelmodulbox wegführenden Medienführungen dienen also zur Leitung von Strom, der damit zu entfernten Bereichen geführt werden kann ohne weitere Bauteile, so dass eine geringere thermische Masse und auch eine geringere Wärmeabführung vorliegt, was insbesondere bedeutsam ist bei Festoxidbrennstoffzellen, die bei hohen Temperaturen betrieben werden müssen. Durch die eingesparten Bauteile sinkt die Systemkomplexität und vereinfacht sich die Montage.

Dabei besteht insbesondere auch die Möglichkeit, dass der elektrisch leitfähige Bereich der Wandung mit dem elektrisch leitfähigen Bereich der gegenüberliegenden Medienführung in Kontakt steht, also die Anschlussleitung von dem Brennstoffzellenstapel nur zu der Wandung geführt werden muss, die den elektrischen Kontakt zu den Medienführungen herstellt.

Bevorzugt ist weiterhin, wenn ein Spannmittel eines Spannsystems um die Medienführungen geführt ist, und wenn das Spannmittel aus mindestens zwei, voneinander elektrisch isolierten, elektrisch leitfähigen Abschnitten besteht, die an den elektrisch leitfähigen Medienführungen anliegen. Damit kann zur Weiterleitung des über die Wandung oder die Medienführung bereits aus dem Brennstoffzellenstapel herausgeführten Stromes auch das Spannmittel genutzt werden, so dass vielfältige räumliche Möglichkeiten bestehen, den Strom letztendlich abzunehmen. Die Isolierung der Abschnitte ermöglicht dabei die Nutzung des Spannmittels zur Kontaktierung beider Elektroden.

Vorteilhaft ist auch, wenn die Medienführungen und/oder eine Verteilstruktur der Stapelmodulbox eine Federfunktion aufweisen, um so diesen eine weitere Funktion zuzuweisen.

Es besteht dabei die Möglichkeit, dass das Spannmittel in Umfangsrichtung der Stapelmodulbox um vier Medienführungen geführt ist.

Alternativ kann die Gestaltung auch so getroffen sein, dass das Spannmittel in Längsrichtung von zwei der Medienführungen um die Stapelmodulbox geführt ist, wobei die Stapelmodulbox mehrfach vorgesehen sein kann in einer dem Verlauf des Spannmittels entsprechenden Reihung.

Die vorstehend genannten Vorteile und Wirkungen gelten auch für eine Brennstoffzellenvorrichtung mit einer Stapelmodulbox in Verbindung mit einer Mehrzahl zu der Stapelmodulbox geführten Medienführungen der vorstehend geschilderten Art sowie für ein Brennstoffzellen-Fahrzeug mit einer derartigen Brennstoffzellenvorrichtung.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schematische Darstellung eines Querschnitts durch eine Stapelmodulbox mit der Stromabführung über die Medienführungen,
- Fig. 2: eine der Figur 1 entsprechende Darstellung mit der Einbeziehung der Wandung der Stapelmodulbox in die Stromabführung,
- Fig. 3: eine der Figur 1 entsprechende Darstellung mit der Stromabführung exklusiv über die Wandung der Stapelmodulbox,
- Fig. 4: eine schematische Darstellung eines Querschnitts durch eine Stapelmodulbox, mit dem durch ein Spannmittel eine Verspannkraft ausübenden Verspannsystem, mit einer Stromabführung über die Medienführungen und das Spannsystem,
- Fig. 5: eine der Figur 4 entsprechende Darstellung mit einer gegenüber Figur 4 erhöhten Verspannkraft,
- Fig. 6: eine der Figur 1 entsprechende Ausführungsform mit der Beaufschlagung aller Medienführungen durch das Spannsystem,
- Fig. 7: eine schematische, perspektivische Darstellung der Ausführungsform aus Fig. 6, und
- Fig. 8: eine der Figur 7 entsprechende Darstellung einer weiteren Ausführungsform.

Eine Brennstoffzellenvorrichtung umfasst einen Brennstoffzellenstapel 1, der eine Mehrzahl vorzugsweise von in Reihe geschalteten Brennstoffzellen 2 aufweist. Die Brennstoffzellenvorrichtung kann beispielsweise Teil eines nicht näher dargestellten Brennstoffzellenfahrzeugs sein. Die Brennstoffzellen 2 können dabei insbesondere auch durch Festoxid-Brennstoffzellen gebildet sein.

Jede der Brennstoffzellen 2 umfasst eine Anode und eine Kathode sowie eine die Anode von der Kathode trennende ionenleitfähige Membran. Über Anodenräume innerhalb des Brennstoffzellenstapels 1 wird den Anoden Brennstoff (z.B. Wasserstoff) aus einem Gasdruckspeicher über eine Anodenzufuhrleitung zugeführt. Über Kathodenräume innerhalb des Brennstoffzellenstapels 1 kann den Kathoden Kathodengas (z.B. Sauerstoff oder Sauerstoff enthaltende Luft) über eine Kathodenzufuhrleitung zugeführt werden. Die Brennstoffzellenvorrichtung kann weiterhin einen Kühlmittelkreislauf zur Temperierung des Brennstoffzellenstapels 1 umfassen.

Der Brennstoff, das Kathodengas und gegebenenfalls das Kühlmittel müssen in den Brennstoffzellenstapel 1 eingeleitet und aus diesem wieder abgeleitet werden, wozu Medienführungen 3 genutzt werden.

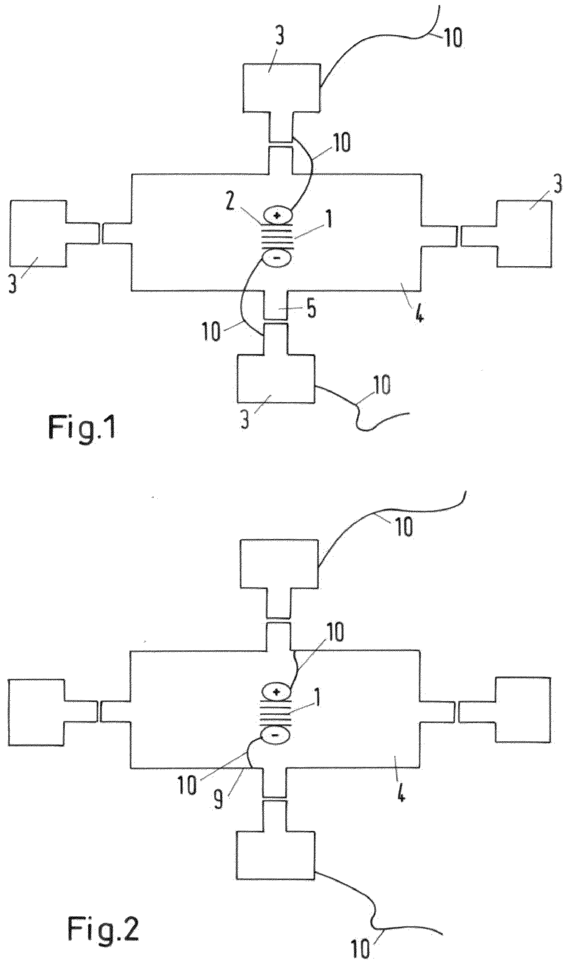

In Figur 1 ist eine stark vereinfachte Darstellung eines Brennstoffzellenstapels 1 gezeigt, der in einer Stapelmodulbox 4 aufgenommenen ist. Die Reaktanten, also der Brennstoff und das Oxidationsmittel, werden der Stapelmodulbox 4 über die Medienführungen 3 zugeführt und über eine Verteilstruktur 5 in der Stapelmodulbox 4 an die Elektroden verteilt.

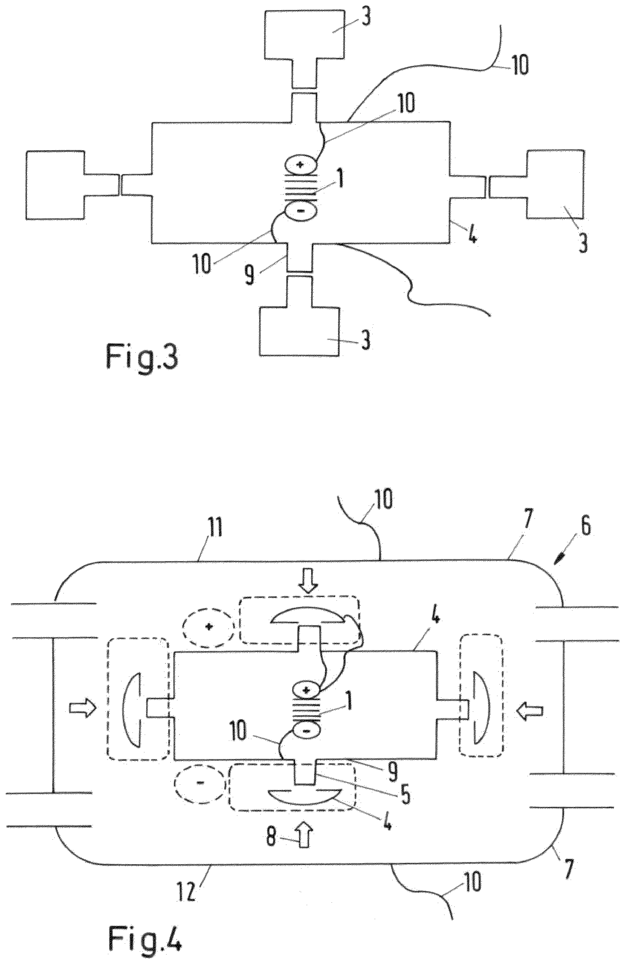

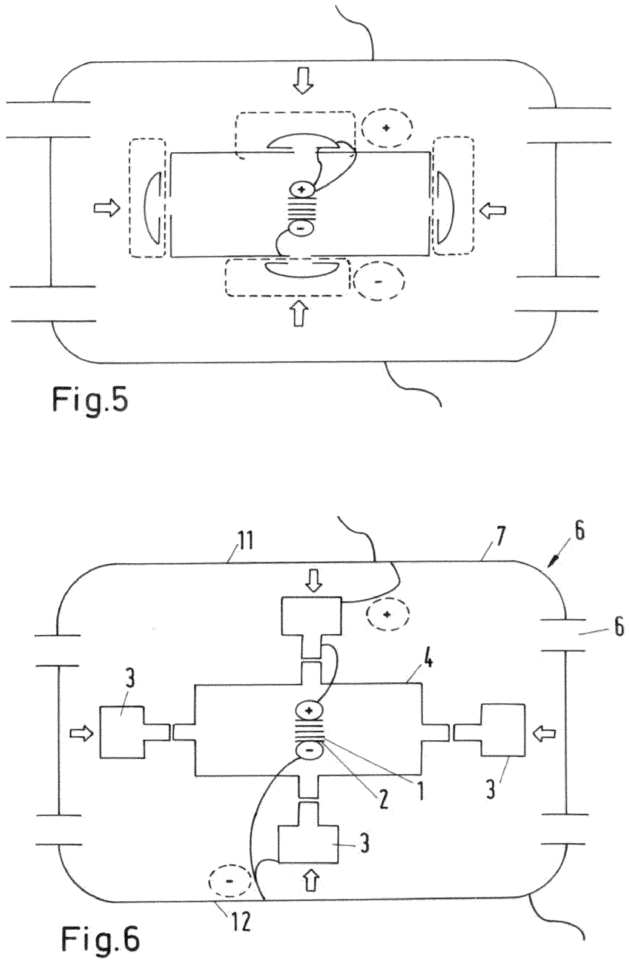

Um die Stapelmodulbox 4 ist ein Verspannsystem 6 geführt, dessen Spannmittel 7 die mit einer Federfunktion ausgeführte, durch Gaskanäle an der Außenseite gebildete Verteilstruktur 5 umgibt, wobei in den Figuren 4 und 5 die Federwirkung angedeutet ist, als Reaktion auf die durch Pfeile 8 angedeutete Spannkraft.

Die Stapelmodulbox 4 mit dem darin aufgenommenen, mindestens eine Brennstoffzelle, insbesondere eine Festoxid-Brennstoffzelle aufweisenden Brennstoffzellenstapel 1, steht also in Verbindung mit einer Mehrzahl zu der Stapelmodulbox 4 geführten Medienführungen 3, aus denen Medien an die Stapelmodulbox 4 abgegeben oder aus der Stapelmodulbox 4 aufgenommen können. In Figur 1 weisen zwei der Medienführungen 3 zur Stromabführung aus dem Brennstoffzellenstapel 1 elektrisch leitfähige Bereiche auf beziehungsweise sind insgesamt aus einem elektrisch leitfähigen Material gebildet.

Figur 3 zeigt, dass die Wandung 9 der Stapelmodulbox 4 elektrisch leitfähig ist, bei dem gezeigten Ausführungsbeispiel an den den Medienführungen 3 gegenüberliegenden Bereichen. Anschlussleitungen 10 sind von dem Brennstoffzellenstapel 1 zu den elektrischen leitfähigen Bereichen der Medienführungen 3 und/oder der Wandung 9 und von diesen weggeführt.

Figur 2 zeigt eine Ausführungsform, bei der der elektrisch leitfähige Bereich der Wandung 9 mit dem elektrisch leitfähigen Bereich der gegenüberliegenden Medienführung 3 in Kontakt steht.

Figur 4 verweist in Kombination mit Figur 5 auf eine Ausführungsform, bei der das Spannmittel 7 des Verspannsystems 6 um die Medienführungen 3 geführt ist, wobei das Spannmittel 7 aus mindestens zwei, voneinander elektrisch isolierten, elektrisch leitfähigen Abschnitten 11,12 besteht, die an den elektrisch leitfähigen Medienführungen 3 anliegen. Die Medienführungen 3 und/oder die Verteilstruktur 5 der Stapelmodulbox 4 weisen vorliegend zusätzlich eine Federfunktion auf.

Bei den vorstehend erörterten Ausführungsformen erfolgt eine Stromabführung aus der Stapelmodulbox 4 durch bereits vorliegende, für den Betrieb erforderliche Strukturen, so dass eine Verringerung der Komplexität der Stapelmodulbox 4 erreicht ist, mit der Möglichkeit, den Strom entfernten Bereichen zuzuführen. Dabei ist wegen der Gleichstromcharakteristik darauf geachtet, von beiden Elektroden getrennte Stromführungen bereit zu stellen, so dass isolierte, also elektrisch nicht leitfähige Bereich in der Wandung 9 der Stapelmodulbox 4 und des Spannmittels 7 bereit gestellt sind.

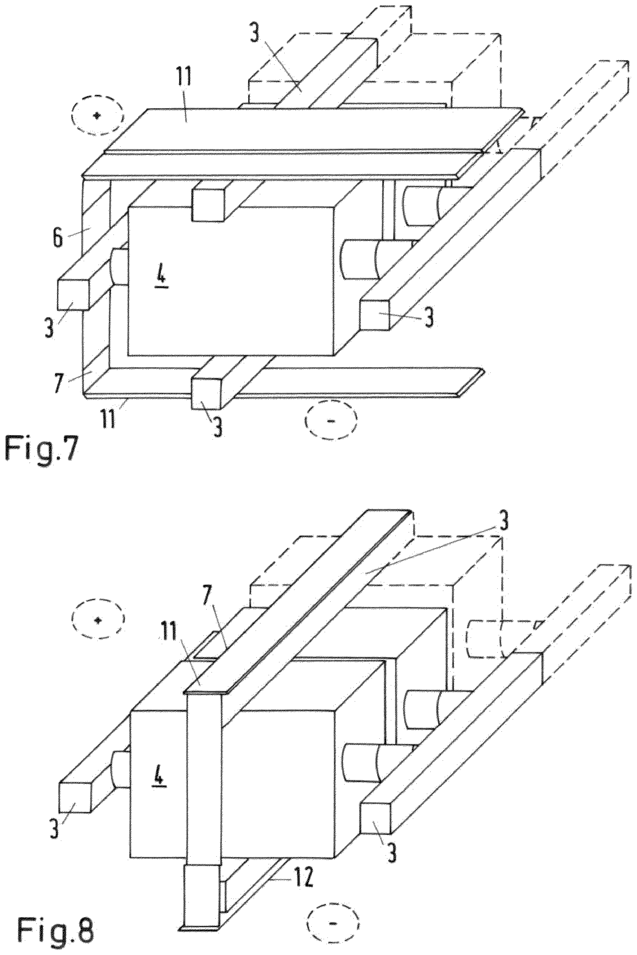

Die Figuren 6 und 7 zeigen, dass das Spannmittel 7 in Umfangsrichtung der Stapelmodulbox 4 um vier Medienführungen 3 geführt ist, während Figur 8 auf die Möglichkeit verweist, dass das Spannmittel 7 in Längsrichtung von zwei der Medienführungen 3 um die Stapelmodulbox 4 geführt sein kann, was sich insbesondere dann anbietet, wenn die Stapelmodulbox 4 mehrfach vorgesehen ist in einer dem Verlauf des Spannmittels 7 entsprechenden Reihung.

### BEZUGSZEICHENLISTE:

- 1: Brennstoffzellenstapel
- 2: Brennstoffzelle
- 3: Medienführung
- 4: Stapelmodulbox
- 5: Verteilstruktur
- 6: Verspannsystem
- 7: Spannmittel
- 8: Pfeil
- 9: Wandung
- 10: Anschlussleitung
- 11: Abschnitt
- 12: Abschnitt

## Patentansprüche

1. Stapelmodulbox (4) mit einem darin aufgenommenen, mindestens eine Brennstoffzelle (2) aufweisenden Brennstoffzellenstapel (1), in Verbindung mit einer Mehrzahl zu der Stapelmodulbox (4) geführten Medienführungen (3), aus denen Medien an die Stapelmodulbox (4) abgegeben oder aus der Stapelmodulbox (4) aufgenommen werden können, wobei mindestens zwei der Medienführungen (3) zur Stromabführung aus dem Brennstoffzellenstapel (1) elektrisch leitfähige Bereiche aufweisen und wobei Anschlussleitungen (10) von dem Brennstoffzellenstapel (1) zu den elektrischen leitfähigen Bereichen und von diesen weggeführt sind.

2. Stapelmodulbox (4) in Verbindung mit einer Mehrzahl zu der Stapelmodulbox (4) geführten Medienführungen (3) nach Anspruch 1, **dadurch gekennzeichnet, dass** die Wandung der Stapelmodulbox (4) an den den Medienführungen (3) gegenüberliegenden Bereichen elektrisch leitfähig ist.

3. Stapelmodulbox (4) in Verbindung mit einer Mehrzahl zu der Stapelmodulbox (4) geführten Medienführungen (3) nach Anspruch 1, **dadurch gekennzeichnet, dass** der elektrisch leitfähige Bereich der Wandung (9) mit dem elektrisch leitfähigen Bereich der gegenüberliegenden Medienführung (3) in Kontakt steht.

4. Stapelmodulbox (4) in Verbindung mit einer Mehrzahl zu der Stapelmodulbox (4) geführten Medienführungen (3) nach Anspruch 1 oder 3, **dadurch gekennzeichnet, dass** ein Spannmittel (7) eines Verspannsystems (6) um die Medienführungen (3) geführt, und dass das Spannmittel (7) aus mindestens zwei, voneinander elektrisch isolierten, elektrisch leitfähigen Abschnitten (11,12) besteht, die an den elektrisch leitfähigen Medienführungen (3) anliegen.

5. Stapelmodulbox (4) in Verbindung mit einer Mehrzahl zu der Stapelmodulbox (4) geführten Medienführungen (3) nach einem der Ansprüche 1 bis 4, **dadurch gekennzeichnet, dass** die Medienführungen (3) und/oder eine Verteilstruktur (5) der Stapelmodulbox (4) eine Federfunktion aufweisen.

6. Stapelmodulbox (4) in Verbindung mit einer Mehrzahl zu der Stapelmodulbox (4) geführten Medienführungen (3) nach Anspruch 4 oder 5, **dadurch gekennzeichnet, dass** das Spannmittel (7) in Umfangsrichtung der Stapelmodulbox (4) um vier Medienführungen (3) geführt ist.

7. Stapelmodulbox (4) in Verbindung mit einer Mehrzahl zu der Stapelmodulbox (4) geführten Medienführungen (3) nach einem der Ansprüche 4 oder 5, **dadurch gekennzeichnet, dass** das Spannmittel (7) in Längsrichtung von zwei der Medienführungen (3) um die Stapelmodulbox (4) geführt ist.

8. Stapelmodulbox (4) in Verbindung mit einer Mehrzahl zu der Stapelmodulbox (4) geführten Medienführungen (3) nach Anspruch 7, **dadurch gekennzeichnet, dass** die Stapelmodulbox (4) mehrfach vorgesehen ist in einer dem Verlauf des Spannmittels (7) entsprechenden Reihung.

9. Brennstoffzellenvorrichtung mit einer Stapelmodulbox (4) in Verbindung mit einer Mehrzahl zu der Stapelmodulbox (4) geführten Medienführung (3) nach einem der Ansprüche 1 bis 8.

10. Brennstoffzellen-Fahrzeug mit einer Brennstoffzellenvorrichtung nach Anspruch 9.

## Claims

1. A stack module box (4) having a fuel cell stack (1) which is accommodated therein and has at least one fuel cell (2), in conjunction with a plurality of media guides (3) which are guided to the stack module box (4) and from which media can be delivered to the stack module box (4) or can be received from the stack module box (4), wherein at least two of the media guides (3) have electrically conductive regions for conducting current away from the fuel cell stack (1) and wherein connecting lines (10) are led from the fuel cell stack (1) to the electrically conductive regions and away from these.

2. The stack module box (4) in conjunction with a plurality of media guides (3) guided to the stack module box (4) according to claim 1, **characterized in that** the wall of the stack module box (4) is electrically conductive at the regions opposite the media guides (3).

3. The stack module box (4) in connection with a plurality of media guides (3) guided to the stack module box (4) according to claim 1, **characterized in that** the electrically conductive region of the wall (9) is in contact with the electrically conductive region of the opposite media guide (3).

4. The stack module box (4) in conjunction with a plurality of media guides (3) guided to the stack module box (4) according to claim 1 or 3, **characterized in that** a clamping means (7) of a clamping system (6) is guided around the media guides (3), and **in that** the clamping means (7) consists of at least two electrically conductive sections (11, 12) which are electrically insulated from one another and which bear against the electrically conductive media guides (3).

5. The stack module box (4) in connection with a plurality of media guides (3) guided to the stack module box (4) according to one of claims 1 to 4, **characterized in that** the media guides (3) and/or a distribution structure (5) of the stack module box (4) have a spring function.

6. The stack module box (4) in connection with a plurality of media guides (3) guided to the stack module box (4) according to claim 4 or 5, **characterized in that** the clamping means (7) is guided around four media guides (3) in the circumferential direction of the stack module box (4).

7. The stack module box (4) in connection with a plurality of media guides (3) guided to the stack module box (4) according to any one of claims 4 or 5, **characterized in that** the clamping means (7) is guided around the stack module box (4) in the longitudinal direction of two of the media guides (3).

8. The stack module box (4) in connection with a plurality of media guides (3) guided to the stack module box (4) according to claim 7, **characterized in that** the stack module box (4) is provided several times in a sequence corresponding to the course of the clamping means (7).

9. A fuel cell device with a stack module box (4) in connection with a plurality of media guides (3) guided to the stack module box (4) according to any one of claims 1 to 8.

10. The fuel cell vehicle with a fuel cell device according to claim 9.

## Revendications

1. Boîte de module d'empilement (4) avec un empilement de piles à combustible (1) y étant logé et présentant au moins une pile à combustible (2), en association avec une pluralité de guides de fluide (3) guidés vers la boîte de module d'empilement (4), à partir desquels des fluides peuvent être délivrés à la boîte de module d'empilement (4) ou reçus de la boîte de module d'empilement (4), dans laquelle au moins deux des guides de fluides (3) présentent des zones électriquement conductrices pour l'évacuation du courant de l'empilement de piles à combustible (1) et dans lequel des lignes de raccordement (10) sont guidées de l'empilement de piles à combustible (1) vers les zones électriquement conductrices et à partir de celles-ci.

2. Boîte de module d'empilement (4) en association avec une pluralité de guides de fluides (3) guidés vers la boîte de module d'empilement (4) selon la revendication 1, **caractérisée en ce que** la paroi de la boîte de module d'empilement (4) est électriquement conductrice dans les zones opposées aux guides de fluides (3).

3. Boîte de module d'empilage (4) en association avec une pluralité de guides de fluides (3) guidés vers la boîte de module d'empilage (4) selon la revendication 1, **caractérisée en ce que** la zone électriquement conductrice de la paroi (9) est en contact avec la zone électriquement conductrice du guide de fluides (3) opposé.

4. Boîte de module d'empilement (4) en association avec une pluralité de guides de fluides (3) guidés vers la boîte de module d'empilement (4) selon la revendication 1 ou 3, **caractérisée en ce qu'**un moyen de serrage (7) d'un système de serrage (6) est guidé autour des guides de fluides (3), et **en ce que** le moyen de serrage (7) est constitué d'au moins deux sections (11, 12) électriquement conductrices isolées l'une de l'autre, qui reposent contre les guides de fluides (3) électriquement conducteurs.

5. Boîte de module d'empilement (4) en association avec une pluralité de guides de fluides (3) guidés vers la boîte de module d'empilement (4) selon l'une quelconque des revendications 1 à 4, **caractérisée en ce que** les guides de fluides (3) et/ou une structure de distribution (5) de la boîte de module d'empilement (4) présentent une fonction de ressort.

6. Boîte de module d'empilement (4) en association avec une pluralité de guides de fluides (3) guidés vers la boîte de module d'empilement (4) selon la revendication 4 ou 5, **caractérisée en ce que** le moyen de serrage (7) est guidé dans la direction circonférentielle de la boîte de module d'empilement (4) autour de quatre guides de fluides (3).

7. Boîte de module d'empilement (4) en association avec une pluralité de guides de fluides (3) guidés vers la boîte de module d'empilement (4) selon l'une quelconque des revendications 4 ou 5, **caractérisée en ce que** le moyen de serrage (7) est guidé dans la direction longitudinale de deux des guides de fluides (3) autour de la boîte de module d'empilement (4).

8. Boîte de module d'empilement (4) en association avec une pluralité de guides de fluides (3) guidés vers la boîte de module d'empilement (4) selon la revendication 7, **caractérisée en ce que** la boîte de module d'empilement (4) est prévue plusieurs fois dans un ordre correspondant au parcours du moyen de serrage (7).

9. Dispositif à piles à combustible avec une boîte de module d'empilement (4) en association avec une pluralité de guide de fluides (3) guidés vers la boîte de module d'empilement (4) selon l'une quelconque des revendications 1 à 8.

10. Véhicule à piles à combustible avec un dispositif à piles à combustible selon la revendication 9.
